# EUROPÄISCHE PATENTSCHRIFT

(11) **EP 2 683 653 B1**
(45) Veröffentlichungstag und Bekanntmachung des Hinweises auf die Patenterteilung: **20.04.2016**
(21) Anmeldenummer: 12707510.9
(22) Anmeldetag: 28.02.2012
(51) Int. Cl.: C01B 33/04, C01B 33/107

(54) **VERFAHREN ZUR REDUZIERUNG DES ALUMINIUMGEHALTES VON NEOPENTASILAN**
METHOD FOR REDUCING THE ALUMINIUM CONTENT OF NEOPENTASILANE
PROCÉDÉ DE RÉDUCTION DE LA TENEUR EN ALUMINIUM DU NÉOPENTA-SILANE

(30) Priorität: 10.03.2011 DE 102011005387
(43) Veröffentlichungstag der Anmeldung: 15.01.2014
(73) Patentinhaber: Wacker Chemie AG, 81737 München (DE)
(72) Erfinder: TROEGEL, Dennis, 82216 Maisach (DE)
(74) Vertreter: Fritz, Helmut
(86) Internationale Anmeldenummer: PCT/EP2012/053300
(87) Internationale Veröffentlichungsnummer: WO 2012/119884

(56) Entgegenhaltungen:
- WO-A1-2008/051328
- DE-A1-102009 027 194

## Beschreibung

Die Erfindung betrifft ein Verfahren zur Reduzierung des Aluminiumgehaltes von Neopentasilan durch Behandeln mit organischen Verbindungen.

Neopentasilan (NPS, Tetrakis(trihydridosilyl)silan) kann als Precursor für die Abscheidung siliciumhaltiger Filme über Chemische Gasphasenabscheidung (CVD) verwendet werden. Der Vorteil von NPS liegt in der hohen Abscheiderate von Si bzw. SiC beim CVD-Prozess sowie der verhältnismäßig niedrigen Abscheidetemperaturen im Vergleich zu anderen Silanen (J. C. Sturm, K. H. Chung, ECS Transactions 2008, 16, 799-805).

Geeignete Darstellungsverfahren, um NPS in industriellem Maßstab herzustellen, sind in WO 2008051328, WO 2010043551 und WO 2010149547 beschrieben.

WO 2008051328 beschreibt die Umsetzung von Hexachlordisilan (HCDS) mit tertiären Aminen als Katalysatoren zu Dodekachlorneopentasilan (CNPS). Dieser Zugang zu Neopentasilanen wurde in der WO 20100435551 unter Verwendung von Etherverbindungen, insbesondere Tetrahydrofuran (THF), als Katalysatoren verbessert. Im zweiten Schritt des in der WO 2008051328 beschriebenen Herstellungsverfahrens wird das erhaltene Dodekachlorneopentasilan mit Diisobutylaluminiumhydrid (DIBAH) zu NPS reduziert. Das Verfahren weist allerdings den Nachteil auf, dass das erhaltene NPS trotz Reinigung mittels Destillation bzw. Kondensation noch deutliche Anteile an aluminiumorganischen Verunreinigungen (vor allem Diisobutylaluminiumchlorid (DIBAC)) enthält. Aluminium beeinflusst jedoch als Dotierelement die halbleitenden Eigenschaften von Silicium, so dass für viele Anwendungen von siliciumhaltigen Filmen der Gehalt an Aluminium auf ein Minimum reduziert werden muss.

In Freund "Neuere Aspekte zur basenkatalysierten Polykondensation von Silanen und zur präparativen Chemie der Silane und Silyl-Anionen", Inaugural-Dissertation der Universität zu Köln, 1973 ist die Hydrierung von Brom-neoPentasilan mit Diisobutylaluminiumhydrid in Diethylether beschrieben.

In Höfler u, Janach, "Zur Kenntnis des Neopentasilans" Inorg. Nucl. Chem. Letters, 1973; vol. 9, S. 723 - 725 ist die Hydrierung von neo-Si₅Cl₁₂ mit LiAlH₄ in Ether beschrieben.

Gegenstand der Erfindung ist ein Verfahren zur Reduzierung des Aluminiumgehaltes von Neopentasilan durch Behandeln mit organischen Verbindungen D, die Atome ausgewählt aus N, O oder S enthalten, welche freie Elektronenpaare an diesen Atomen aufweisen, wobei die Verbindungen D, welche Sauerstoffatome mit freien Elektronenpaaren aufweisen, monomere oder polymere Sauerstoffverbindungen sind, die ausgewählt werden aus Alkoholaten, Carbonylen, Carboxylaten, nichtaromatischen Oxacyclen und aromatischen Oxacyclen.

Überraschenderweise wurde gefunden, dass durch den Zusatz geringer Mengen an organischen Verbindungen D der Al-Gehalt von NPS in einem Maße reduziert wird, welches durch die Verwendung anderer Stoffgruppen nicht möglich ist. So können bei der Herstellung anfallende, typischerweise in der Größenordnung von ca. 3000 ppm liegende Aluminium-Restgehalte auf einen Gehalt < 100 ppm Al reduziert werden. Das so gereinigte NPS ist aufgrund seines niedrigen Al-Gehalts zur Herstellung von siliciumhaltigen Filmen, besonders in der Halbleitertechnik oder Photovoltaik verwendbar.

Ein weiterer Vorteil des Verfahrens ist, dass sich NPS als chemisch äußerst empfindliche und reaktive Substanz gegenüber den verwendeten Verbindungen D stabil verhält.

Die organischen Verbindungen D bilden über die freien Elektronenpaare an den ausgewählten Atomen N, O oder S mit den Aluminium-Verbindungen Alan-Donor-Addukte. Vorzugsweise wird die Behandlung mit organischen Verbindungen D nach der an sich bekannten NPS-Herstellung durchgeführt. Die sich mit den organischen Verbindungen D und den Aluminium-Verbindungen bildenden Addukte können leicht vom NPS abgetrennt werden. Vorzugsweise werden Verbindungen D eingesetzt, die schwerflüchtige Addukte bilden. In einem nachfolgenden Kondensationsschritt wird NPS von den gebildeten Addukten abgetrennt.

Die organischen Verbindungen D können monomer oder polymer sein. Sie enthalten ein oder mehrere Atome mit freien Elektronenpaaren, ausgewählt aus N, O oder S. Die Verbindungen D können gleiche oder unterschiedliche Atome mit freien Elektronenpaaren, ausgewählt aus N, O oder S enthalten.

Verbindungen D, welche Stickstoffatome mit freien Elektronenpaaren aufweisen, können monomere oder polymere Stickstoffverbindungen sein, beispielsweise Ammoniak, primäre, sekundäre oder tertäre Amine, Amide, Nitrile, Imine, Aldimine, nichtaromatische Azacyclen oder aromatische Azacyclen.

Bevorzugt sind Amine der allgemeinen Formel I

NR¹R²R³ (I),

wobei
R¹, R², R³ Wasserstoff oder einen C₁-C₂₀-KohlenwasserstoffRest bedeuten, in dem eine oder mehrere, einander nicht benachbarte Methyleneinheiten durch Gruppen -O-, -CO-,-COO-, -OCO-, oder -OCOO-, -S-, oder -NR^{X}- ersetzt sein können und in dem eine oder mehrere, einander nicht benachbarte Methineinheiten durch Gruppen, -N=,-N=N-,oder - P= ersetzt sein können, wobei zwei oder drei der Reste R¹, R², R³ miteinander verbunden sein können,
**R^{x}** Wasserstoff oder einen C₁-C₁₀-Kohlenwasserstoffrest bedeutet,
mit der Massgabe, dass höchstens zwei der Reste R¹, R², R³ Wasserstoff sein können.

Die C₁-C₂₀-Kohlenwasserstoffreste **R¹, R², R³** und können aliphatisch gesättigt oder ungesättigt, aromatisch, geradkettig oder verzweigt sein. **R¹, R², R³** weisen vorzugsweise 1 bis 12 Atome, besonders bevorzugt 3 bis 10 Atome, insbesondere nur Kohlenstoffatome auf.

Wenn in der allgemeinen Formel I zwei der Reste R¹, R², R³ miteinander verbunden sind, handelt es sich um nichtaromatische Azacyclen. Vorzugsweise bilden die miteinander verbundenen Reste zusammen einen zweiwertigen C₄-C₁₁-Kohlenwasserstoffrest, insbesondere mit 4, 5, 6, 7 und 9 Kohlenstoffatomen. Besonders bevorzugt sind Pyrrolidin, Piperidin und Hexamethylenimin.

Ebenfalls bevorzugte Verbindungen D, welche Stickstoffatome mit freien Elektronenpaaren aufweisen können sind aromatische Azacyclen mit vorzugsweise 4 bis 10 Ringatomen, die ausgewählt werden aus C, S und O. Vorzugsweise sind alle Ringatome Kohlenstoffatome. Besonders bevorzugt sind Pyridin, Pyrrol, Azatropiliden, Chinolin, Isochinolin und Indol.

Bevorzugt sind Ether der allgemeinen Formel II

OR⁴R⁵ (II),

wobei
**R⁴, R⁵** einen C₁-C₂₀-Kohlenwasserstoff-Rest bedeuten, in dem eine oder mehrere, einander nicht benachbarte Methyleneinheiten durch Gruppen -O-, -CO-, -COO-, -OCO-, oder -OCOO-, -S-, oder -NRY- ersetzt sein können und in dem eine oder mehrere, einander nicht benachbarte Methineinheiten durch Gruppen, -N=, -N=N-, oder -P= ersetzt sein können, wobei die Reste R⁴, R⁵ miteinander verbunden sind und
**R^{y}** Wasserstoff oder einen C₁-C₁₀-Kohlenwasserstoffrest bedeutet.

Die C₁-C₂₀-Kohlenwasserstoffreste **R⁴, R⁵** und können aliphatisch gesättigt oder ungesättigt, aromatisch, geradkettig oder verzweigt sein. **R⁴, R⁵** weisen vorzugsweise 1 bis 12 Atome, besonders bevorzugt 3 bis 10 Atome, insbesondere nur Kohlenstoffatome auf.

Wenn in der allgemeinen Formel II die Reste **R⁴, R⁵** miteinander verbunden sind, handelt es sich um Oxacyclen. Vorzugsweise bilden die miteinander verbundenen Reste zusammen einen zweiwertigen C₄-C₁₁-Kohlenwasserstoffrest, insbesondere mit 4, 5, 7 und 9 Kohlenstoffatomen. Vorzugsweise sind alle Ringatome Kohlenstoffatome. Besonders bevorzugt sind Furan, Tetrahydrofuran, Pyran, Tetrahydropyran, Hexamethylenoxid, Oxacycloheptatrien und Benzofuran.

Verbindungen D, welche Schwefelatome mit freien Elektronenpaaren aufweisen, können monomere oder polymere Schwefelverbindungen sein, beispielsweise Thioether, Thiolate, Thiole, Thiocarbonyle, Thiocyanate, Thiocarboxylate, nichtaromatische Thiacyclen oder aromatische Thiacyclen.

Bevorzugt sind Thioether der allgemeinen Formel III

SR⁶R⁷ (III),

wobei
**R⁶, R⁷** einen C₁-C₂₀-Kohlenwasserstoff-Rest bedeuten, in dem eine oder mehrere, einander nicht benachbarte Methyleneinheiten durch Gruppen -O-, -CO-, -COO-, -OCO-, oder -OCOO-, -S-, oder -NR^{z}- ersetzt sein können und in dem eine oder mehrere, einander nicht benachbarte Methineinheiten durch Gruppen, -N=,-N=N-,oder -P= ersetzt sein können, wobei die Reste R⁶, R⁷ miteinander verbunden sein können und
**R^{z}** Wasserstoff oder einen C₁-C₁₀-Kohlenwasserstoffrest bedeutet.

Die C₁-C₂₀-Kohlenwaoserstoffreute **R⁶, R⁷**und können aliphatisch gesättigt oder ungesättigt, aromatisch, geradkettig oder verzweigt sein. **R⁶, R⁷** weisen vorzugsweise 1 bis 12 Atome, besonders bevorzugt 3 bis 10 Atome, insbesondere nur Kohlenstoffatome auf.

Wenn in der allgemeinen Formel III die Reste **R⁶**, **R⁷** miteinander verbunden sind, handelt es sich um Thiacyclen. Vorzugsweise bilden die miteinander verbundenen Reste zusammen einen zweiwertigen C₄-C₁₁-Kohlenwasserstoffrest, insbesondere mit 4, 5, 7 und 9 Kohlenstoffatomen. Vorzugsweise sind alle Ringatome Kohlenstoffatome. Besonders bevorzugt sind Thiolan, Thiophen, Thian, Hexamethylensulfid, Thiotropiliden und Benzothiophen.

Ebenfalls bevorzugt sind Verbindungen, die 2 oder mehr gleiche oder unterschiedliche Atome mit freien Elektronenpaaren, ausgewählt aus N, O oder S enthalten. Diese Verbindungen können aliphatisch gesättigt oder ungesättigt, cyclisch oder acyclisch, aromatisch, geradkettig oder verzweigt sein. Beispiele für acyclische Verbindungen sind Tetramethylethylendiamin, Monoethanolamin und Mercaptoethanol. Die Heterocyclen enthalten vorzugsweise 5 bis 30 Ringatome und können monocyclisch, bicyclisch oder multicyclisch sein. Beispiele für Heterocyclen sind Piperazin, Imidazol, Benzimidazol, Pyrimidin, Morpholin, Oxazol, Pyrazol, Thiazol, Benzoxazol, Triazol, [18]Krone-6, Diaza-[18]Krone-6 und [2.2.2]Kryptand.

Die polymeren organischen Verbindungen D können die Atome mit freien Elektronenpaaren, ausgewählt aus N, O oder S, innerhalb der Polymerkette aufweisen oder Seitengruppen tragen, die die Atome mit freien Elektronenpaaren, ausgewählt aus N, O oder S aufweisen, z.B. Poly(4-vinylpyridin).

Auch können die organischen Verbindungen D physikalisch oder chemisch an eine anorganische Matrix gebunden sein. Beispielsweise können die Verbindungen D als Aminoalkylgruppen an ein Polysiloxan oder an eine Kieselsäureoberfläche gebunden sein.

Vorzugsweise wird das Verfahren bei einer Temperatur von mindestens -65 °C, besonders bevorzugt mindestens -10 °C, insbesondere mindestens 0 °C und höchstens 90 °C, besonders bevorzugt höchstens 60 °C, insbesondere höchstens 40 °C durchgeführt.

Die Addukte aus Verbindungen D und den Aluminium-Verbindungen sind üblicherweise schwerer flüchtig als NPS.

In einer bevorzugten Ausführungsform wird eine Verbindung D eingesetzt, die flüchtiger als NPS ist. Vorzugsweise wird dabei die Verbindung D möglichst stöchiometrisch zu den im NPS enthaltenden Aluminium-Verbindungen eingesetzt. Vorzugsweise siedet Verbindung D bei 0,1 MPa mindestens 10 °C, insbesondere mindestens 20 °C tiefer als NPS. Bei dieser Ausführungsform können zuerst Verbindung D und dann NPS destillativ von den Addukten aus Verbindungen D und den Aluminium-Verbindungen abgetrennt werden.

In einer weiteren bevorzugten Ausführungsform wird eine Verbindung D eingesetzt, die schwerer flüchtig als NPS ist. Vorzugsweise siedet Verbindung D bei 0,1 MPa mindestens 10 °C, insbesondere mindestens 20 °C höher als NPS. Bei dieser Ausführungsform kann zuerst NPS destillativ von Verbindung D und den Addukten aus Verbindungen D und den Aluminium-Verbindungen abgetrennt werden.

In einer weiteren bevorzugten Ausführungsform wird eine Verbindung D eingesetzt, die nicht im NPS löslich ist. Dabei ist die Verbindung D vorzugsweise fest und kann nach der Umsetzung zusammen mit dem gebildeten Addukt physikalisch abgetrennt werden. Beispielsweise geschieht die Abtrennung durch Filtration oder Zentrifugation oder NPS wird als flüssige mobile Phase durch eine stationäre, die Verbindung D enthaltende Phase geleitet. NPS kann auch gasförmig als mobile Phase durch eine stationäre, die Verbindung D enthaltende Phase geleitet werden.

Neopentasilan kann rein oder als Bestandteil von Mischungen mit Verbindung D umgesetzt werden. Beispielsweise kann NPS im Verfahren mit einem aprotischen Lösungsmittel gemischt vorliegen. Beispiele für solche Lösungsmittel sind chlorierte Kohlenwasserstoffe, wie Dichlormethan, Trichlormethan, Tetrachlormethan, 1,2-Dichlorethan, Trichlorethylen; Kohlenwasserstoffe, wie Pentan, *n*-Hexan, Hexan-Isomerengemische, Heptan, Oktan, Waschbenzin, Petrolether, Benzol, Toluol, Xylole; Siloxane, insbesondere lineare Dimethylpolysiloxane mit Trimethylsilylendgruppen mit bevorzugt 0 bis 6 Dimethylsiloxaneinheiten, oder cyclische Dimethylpolysiloxane mit bevorzugt 4 bis 7 Dimethylsiloxaneinheiten, beispielsweise Hexamethyldisiloxan, Octamethyltrisiloxan, Octamethylcyclotetrasiloxan und Decamethylcyclopentasiloxan; Schwefelkohlenstoff und Nitrobenzol, oder Gemische dieser Lösungsmittel.

Vorzugsweise ist das Lösungsmittel schwerer flüchtig als NPS. Vorzugsweise siedet das Lösungsmittel bei 0,1 MPa mindestens 10 °C, insbesondere mindestens 20 °C höher als NPS.

Alle vorstehenden Symbole der vorstehenden Formeln weisen ihre Bedeutungen jeweils unabhängig voneinander auf. In allen Formeln ist das Siliciumatom vierwertig.

Sofern nicht anders angegeben, wurden die nachstehenden Beispiele in einer Atmosphäre aus trockenem Argon 5.0, und bei einem Druck der umgebenden Atmosphäre, also etwa 1013 mbar sowie bei Raumtemperatur, also bei etwa 23 °C durchgeführt.

Alle prozentualen Angaben in den Beispielen beziehen sich auf das Gewicht, sofern nichts anderes angegeben wird. Die für die Synthesen verwendeten Lösungsmittel wurden nach Standardverfahren getrocknet und unter einer trockenen Argon-Atmosphäre aufbewahrt. Die für die NMR-Spektroskopie eingesetzten kommerziell erhältlichen deuterierten Lösungsmittel wurden aus abgeschmolzenen Ampullen ohne weitere Reinigung direkt zur Messung eingesetzt. Die folgenden Methoden und Materialien wurden in den Beispielen verwendet:
Kernresonanz-Spektroskopie (NMR):
   Alle angegebenen chemischen Verschiebungen beziehen sich auf die *δ*-Skala und sind in ppm angegeben. Die ¹H-, ¹³C{¹H} - und ²⁹Si{¹H}-NMR-Spektren wurden mit einem Avance 300- (¹H, 300,1 MHz; ²⁹Si, 59,6 MHz) oder Avance 500-Gerät (¹H, 500,1 MHz; ¹³C, 125,8 MHz; ²⁹Si, 99,4 MHz) der Firma Bruker bei 23 °C aufgenommen. C₆D₆ wurde als Lösungsmittel verwendet. Die Proben (∼0,1 ml) wurden in 0,7 ml C₆D₆ in einem NMR-Röhrchen mit dem Durchmesser 5 mm gelöst. Chemische Verschiebungen (ppm) wurden relativ zu internem C₆HD₅ (¹H, *δ* = 7,28, C₆D₆), internem C₆D₆ (¹³C, *δ* = 128,0, C₆D₆) oder externem TMS (²⁹Si, *δ* = 0; C₆D₆) bestimmt. Alle ¹³C- und ²⁹Si-NMR-Spektren wurden ¹H-breitbandentkoppelt aufgenommen. Bei den Werten der angegebenen Kopplungskonstanten handelt es sich um Beträge; die Vorzeichen wurden nicht bestimmt. Die verwendeten Abkürzungen für die Multiplizitäten sind wie folgt definiert: s, Singulett; d, Dublett; q, Quartett; ht, Heptett von Tripletts; c, Komplex. Bei der Berechnung von Massenanteilen der jeweiligen Komponenten der Zusammensetzung anhand der Integration des ¹H-NMR-Spektrums liegt der geschätzte Fehler bei ±1%. Induktiv-gekoppelte Plasma (ICP)-Emissionsspektroskopie: Die qualitative und quantitative Bestimmung von Aluminium und anderen angebenen Elementen wurde mit dem Gerät Perkin Elmer Optima 7300 DV durchgeführt. Die Proben wurden folgendermaßen angesetzt: Eine genau definierte Menge an NPS-Zusammensetzung (∼300 mg) wurde unter Argon-Atmosphäre tropfenweise zu einer definierten Menge einer 1M Natronlauge unter Rühren gegeben (∼ 3 g), wobei eine hydrolytische Zersetzung unter leichter Erwärmung und Gasentwicklung einsetzte. Nach vollendeter Zugabe wurde die Mischung 24 h unter Argon gerührt, um die Vollständigkeit der hydrolytischen Zersetzung zu gewährleisten. Zur Bestimmung des Al-Gehalts wurde die erhaltene wässrige Lösung mit 5 ml Salpetersäure (65%) und 1 ml Flusssäure (40%) aufgeschlossen und gegen unbehandelte 1M Natronlauge als Referenz gemessen. Alle angegebenen Al-Gehalte beziehen sich auf die Menge an eingesetzter NPS-Zusammensetzung und sind in ppm angegeben; der mittlere Fehler liegt bei ±38 ppm (P = 95%). Die Ergebnisse der Al-Gehaltsbestimmungen der Beispiele 2-11 sowie Vergleichsbeispiel 1 sind in Tabelle 1 zusammengefasst.

Folgende Materialien wurden aus kommerziellen Quellen bezogen und ohne weitere Reinigung direkt eingesetzt: Hexachlordisilan (HCDS), <=100% (Wacker Chemie AG); Tetrahydrofuran (THF), 99,9% (Sigma-Aldrich); Diisobutylaluminiumhydrid (DIBAH), 100% (Akzo Nobel Polymers Chemicals); Tributylamin, 99% (Sigma-Aldrich); Triethylamin, 99.7% (Acros Organics); *N*,*N*,*N'*,*N'-*Tetramethylethylendiamin (TMEDA), 99.5% (Sigma-Aldrich); *n-*Octylamin , 98% (Fluka); Diisopropylamin, 99% (Merck); Piperidin, 99% (Sigma-Aldrich); Di-*n*-butylether, 99,5% (Sigma-Aldrich); Poly(4-vinylpyridin) (Sigma-Aldrich); Polyethylenoxid, 100% (Sigma-Aldrich).

### Beispiel 1

Die Herstellung von Dodekachlorneopentasilan (CNPS) wurde in Anlehnung zu WO 2010043551 durchgeführt: Eine Apparatur bestehend aus einem 2 1-Reaktor mit KPG-Rührer, Vigreux-Kolonne, Kühler, Destillationsvorlage (500 ml-Kolben) und 2 1-Auffangkolben wurde unter Vakuum ausgeheizt (100 °C Reaktor-Mantelheizung, Heißluftpistole 500 °C für weitere Apparaturteile) und mit Argon befüllt. 1500 g HCDS (5,58 mmol) wurden im Reaktor mit 30 ml wasserfreiem THF versetzt und insgesamt 45 h unter Rühren auf 120 °C erhitzt. Das entstehende Destillat wurde kontinuierlich in der Vorlage aufgefangen (569 g; Sdp. 56 °C). Die im Reaktor befindliche schwach gelbliche Suspension wurde mit *n*-Hexan (4x50 ml) in den Auffangkolben überführt, auf -114 °C gekühlt, und der unlösliche farblose Feststoff wurde in der Kälte abfiltriert, mit Siliciumtetrachlorid (2x10 ml) gewaschen und im Vakuum getrocknet (0,03 mbar, 50 °C, 14 h). Nach einer weiteren Reinigung mittels Sublimation im Vakuum (0,02 mbar, 100 °C, 90 min) wurden 508 g (898 mmol; 64%) eines farblosen Feststoffs erhalten. ²⁹Si-NMR (99,4 MHz, C₆D₆); *δ* = 3.5, (*Si*Cl₃), -80,9 (*Si*_{q}).

### Beispiel 2

Die Herstellung von Neopentasilan (NPS) wurde in Anlehnung zu WO 2008051328 durchgeführt: DIBAH (702 g, 4,94 mol) wurde in einer Argon-Atmosphäre unter Rühren bei 30 °C innerhalb von 3 h zu CNPS (202 g, 357 mmol) getropft, und die erhaltene Reaktionsmischung wurde 24 h bei 23 °C gerührt. Die farblose, klare Mischung wurde 90 min unter Rühren bei 40 °C im Vakuum (0,03 mbar) erwärmt, und die flüchtigen Bestandteile wurden bei -196 °C in einer Kühlfalle aufgefangen. Das Kondensat wurde auf 23 °C aufgetaut.
Rückstand: Es wurden 846 g (4,79 mmol; 97%)
Diisobutylaluminiumchlorid (DIBAC) als farblose Flüssigkeit erhalten. ¹H-NMR (500,1 MHz, C₆D₆): *δ* = 0,59 (d, ³*J*_{HH} = 6,9 Hz, 4 H, C*H*₂), 1,16 (d, ³*J*_{HH} = 6.3 Hz, 12 H, C*H*₃), 2,14 (ht, ³*J*_{HH} = 6,9 Hz, ³*J*_{HH} = 6, 3 Hz, 2 H, C*H*). ¹³C-NMR (125,8 MHz, C₆D₆) : *δ* = 25,3 (C*H*₂), 25,8 (C*H*), 27,8 (C*H*₃). Kondensat: Man erhielt 49,6 g einer farblosen Flüssigkeit, enthaltend 67% NPS, 4% (H₃Si)₃Si(SiH₂CH₃) (Me-NPS), 21% andere Silane (SiₙH₂ₙ₊₂), 7% Kohlenwasserstoffe (CₙH₂ₙ₊₂) und 1% DIBAC. Die Identifizierung der Komponenten und die Reinheit der Zusammensetzung wurde aus dem ¹H-NMR-Spektrum bestimmt: ¹H-NMR (500,1 MHz, C₆D₆) : *δ* = 0,26 (t, ³*J*_{HH} = 4,8 Hz, (H₃Si)₃Si(SiH₂C*H*₃); Me-NPS), 0,58 (d, ³*J*_{HH} = 6,9 Hz, C*H*₂; DIBAC), 0,82-1,97 (c, C-*H*; CₙH₂ₙ₊₂), 1,15 (d, ³*J*_{HH} = 6,3 Hz, C*H*₃; DIBAC), 2,13 (ht, ³*J*_{HH} = 6,9 Hz, ³*J*_{HH} = 6,3 Hz, C*H*; DIBAC), 3,27-3,81 (c, Si-*H*; *S*iₙH₂ₙ₊₂), 3,61 (s, Si(Si*H*₃)₄; NPS), 4,02 (q, ³*J*_{HH} = 4,8 Hz, (H₃Si)₃Si (Si*H*₂CH₃); Me-NPS). ²⁹Si-NMR (59,6 MHz, C₆D₆): *δ* = -88,2 (*Si*_{q}; Me-NPS), -89,0, - 90,0, -90,6 und -91,5 (*Si*; SiₙH₂ₙ₊₂), -89,5 (*Si*H₃; NPS), -165,8 (*Si*_{q}; NPS). Der Al-Gehalt beträgt 3132 ppm (ICP). Der Gehalt an Ag, As, B, Bi, Cd, Co, Cr, Cu, Fe, Ga, In, Li, Mn, Nb, Ni, P, Tl, Zn liegt mit <5 ppm und Sb, Pt mit <10 ppm unter der Nachweisgrenze des jeweiligen Elements.

### Beispiel 3

4,51 g NPS-Zusammensetzung aus Beispiel 2 wurden unter Rühren mit 71 mg *n*-Octylamin (0,548 mmol) versetzt, und die erhaltene Mischung wurde 24 h bei 23 °C gerührt und anschließend durch Kondensation im Vakuum gemäß Beispiel 2 gereinigt. Man erhielt 4,16 g einer farblosen Flüssigkeit, enthaltend 70% NPS, 5% Me-NPS, 21% andere Silane (SiₙH₂ₙ₊₂), 3% Kohlenwasserstoffe (CₙH₂ₙ₊₂) und einen Al-Gehalt von 22 ppm (ICP).

### Beispiel 4

4,11 g NPS-Zusammensetzung aus Beispiel 2 wurden unter Rühren mit 51 mg Diisopropylamin (0,500 mmol) versetzt, und die erhaltene Mischung wurde 24 h bei 23 °C gerührt und anschließend durch Kondensation im Vakuum gemäß Beispiel 2 gereinigt. Man erhielt 3,73 g einer farblosen Flüssigkeit, enthaltend 67% NPS, 5% Me-NPS, 23% andere Silane (SiₙH₂ₙ₊₂), 4% Kohlenwasserstoffe (CₙH₂ₙ₊₂) und einen Al-Gehalt von 34 ppm (ICP).

### Beispiel 5

3,89 g NPS-Zusammensetzung aus Beispiel 2 wurden unter Rühren mit 40 mg Piperidin (0,474 mmol) versetzt, und die erhaltene Mischung wurde 24 h bei 23 °C gerührt und anschließend durch Kondensation gemäß Beispiel 2 gereinigt. Man erhielt 3,64 g einer farblose Flüssigkeit, enthaltend 67% NPS, 6% Me-NPS, 24% andere Silane (SiₙH₂ₙ₊₂), 3% Kohlenwasserstoffe (CₙH₂ₙ₊₂) und einen Al-Gehalt von <1 ppm (ICP).

### Beispiel 6

4,13 g NPS-Zusammensetzung aus Beispiel 2 wurden unter Rühren mit 51 mg Triethylamin (0,503 mmol) versetzt, und die erhaltene Mischung wurde 24 h bei 23 °C gerührt und anschließend durch Kondensation gemäß Beispiel 2 gereinigt. Man erhielt 3,68 g einer farblosen Flüssigkeit, enthaltend 67% NPS, 5% Me-NPS, 23% andere Silane (SiₙH₂ₙ₊₂), 5% Kohlenwasserstoffe (CₙH₂ₙ₊₂) und einen Al-Gehalt von 58 ppm (ICP).

### Beispiel 7

4,63 g NPS-Zusammensetzung aus Beispiel 2 wurden unter Rühren mit 105 mg Tri-*n*-butylamin (0,563 mmol) versetzt, und die erhaltene Mischung wurde 24 h bei 23 °C gerührt und anschließend durch Kondensation gemäß Beispiel 2 gereinigt. Man erhielt 3,96 g einer farblosen Flüssigkeit, enthaltend 72% NPS, 5% Me-NPS, 18% andere Silane (SiₙH₂ₙ₊₂), 5% Kohlenwasserstoffe (CₙH₂ₙ₊₂) und einen Al-Gehalt von 42 ppm (ICP).

### Beispiel 8

4,21 g NPS-Zusammensetzung aus Beispiel 2 wurden unter Rühren mit 60 mg *N*,*N*,*N'*,*N'*-Tetramethylethylendiamin (TMEDA; 0,513 mmol) versetzt, und die erhaltene Mischung wurde 24 h bei 23 °C gerührt und anschließend durch Kondensation gemäß Beispiel 2 gereinigt. Man erhielt 3,85 g einer farblosen Flüssigkeit, enthaltend 73% NPS, 4% Me-NPS, 19% andere Silane (SiₙH₂ₙ₊₂), 3% Kohlenwasserstoffe (CₙH₂ₙ₊₂) und einen Al-Gehalt von 26 ppm (ICP).

### Beispiel 9

55 mg Poly(4-vinylpyridin) wurden unter Rühren mit 4,52 g NPS-Zusammensetzung aus Beispiel 2 versetzt, und die erhaltene Suspension wurde 24 h bei 23 °C gerührt. Die flüssigen Bestandteile wurden duch Kondensation gemäß Beispiel 2 gereinigt. Man erhielt 4,08 g einer farblosen Flüssigkeit, enthaltend 67% NPS, 6% Me-NPS, 24% andere Silane (SiₙH₂ₙ₊₂), 3% Kohlenwasserstoffe (CₙH₂ₙ₊₂) und einen Al-Gehalt von 70 ppm (ICP).

### Vergleichsbeispiel 1 (nicht erfindungsgemäss)

3,69 g NPS-Zusammensetzung aus Beispiel 2 wurden ohne weitere Vorbehandlung direkt durch eine weitere Kondensation gemäß Beispiel 2 gereinigt. Man erhielt 3,45 g einer farblosen Flüssigkeit, enthaltend 67% NPS, 5% Me-NPS, 24% andere Silane (SiₙH₂ₙ₊₂), 4% Kohlenwasserstoffe (CₙH₂ₙ₊₂) und einen Al-Gehalt von 435 ppm (ICP).

**Tabelle 1: Aluminium-Gehalte nach Behandlung von NPS mit Donorbasen D und anschließender Kondensation.**

| Beispiel Nr. | verwendete Verbindung D | Al-Gehalt (ICP) [ppm] |
|---|---|---|
| 2* | --- | 3132 |
| 3 | *n*-Octylamin | 22 |
| 4 | Diisopropylamin | 34 |
| 5 | Piperidin | < 1 |
| 6 | Triethylamin | 58 |
| 7 | Tri-*n*-butylamin | 42 |
| 8 | TMEDA | 26 |
| 9 | Poly(4-vinylpyridin) | 70 |
| Vergleichsbeispiel 1* | nur Kondensation ohne D | 435 |

| | | |
|---|---|---|
| *nicht erfindungsgemäss | | |

## Patentansprüche

1. Verfahren zur Reduzierung des Aluminiumgehaltes von Neopentasilan durch Behandeln mit organischen Verbindungen D, die Atome ausgewählt aus N, O oder S enthalten, welche freie Elektronenpaare an diesen Atomen aufweisen, wobei die Verbindungen D, welche Sauerstoffatome mit freien Elektronenpaaren aufweisen, monomere oder polymere Sauerstoffverbindungen sind, die ausgewählt werden aus Alkoholaten, Carbonylen, Carboxylaten, nichtaromatischen Oxacyclen und aromatischen Oxacyclen.

2. Verfahren nach Anspruch 1, welches bei mindestens -65 °C, und höchstens 90 °C durchgeführt wird.

## Claims

1. Process for reducing the aluminum content of neopentasilane by treatment with organic compounds D which contain atoms selected from N, O and S and which have free electron pairs on these atoms, wherein the compounds D which have oxygen atoms with free electron pairs are monomeric or polymeric oxygen compounds which are selected from alkoxides, carbonyls, carboxylates, nonaromatic oxacycles and aromatic oxacycles.

2. Process according to Claim 1, which is performed at at least -65°C and at most 90°C.

## Revendications

1. Procédé de réduction de la teneur en aluminium de néopentasilane par traitement avec des composés organiques D, qui contiennent des atomes choisis parmi N, 0 ou S, qui comprennent des paires d'électrons libres sur ces atomes, les composés D qui comprennent des atomes d'oxygène munis de paires d'électrons libres étant des composés oxygénés monomères ou polymères qui sont choisis parmi les alcoolates, les carbonyles, les carboxylates, les oxacycles non aromatiques et les oxacycles aromatiques.

2. Procédé selon la revendication 1, qui est réalisé à au moins -65 °C et à au plus 90 °C.
